(19) Europäisches Patentamt
European Patent Office
Office européen des brevets

(11) Veröffentlichungsnummer: **0 091 043**
**B1**

# (12) EUROPÄISCHE PATENTSCHRIFT

(45) Veröffentlichungstag der Patentschrift: **02.05.85**

(51) Int. Cl.⁴: **C 01 B 25/238**, C 22 B 3/00

(21) Anmeldenummer: **83103017.6**

(22) Anmeldetag: **26.03.83**

(54) **Verfahren zur Abtrennung von Schwermetallverbindungen aus Zwischenprodukten der Fabrikation von Phosphordüngemitteln.**

(30) Priorität: **05.04.82 DE 3212675**

(43) Veröffentlichungstag der Anmeldung: **12.10.83 Patentblatt 83/41**

(45) Bekanntmachung des Hinweises auf die Patenterteilung: **02.05.85 Patentblatt 85/18**

(84) Benannte Vertragsstaaten: **BE DE FR IT NL SE**

(56) Entgegenhaltungen:
**EP - A - 0 023 428**
**EP - A - 0 070 415**
**DE - A - 3 134 847**
**US - A - 4 226 791**

(73) Patentinhaber: **HOECHST AKTIENGESELLSCHAFT, Postfach 80 03 20, D-6230 Frankfurt am Main 80 (DE)**

(72) Erfinder: **von Plessen, Helmold, Dr., Kugelherrnstrasse 16, D-6240 Königstein/Taunus (DE)**
Erfinder: **Gradl, Reinhard, Dr., Am grünen Weg 6, D-5030 Hürth (DE)**
Erfinder: **Schimmel, Günther, Dr., Ehrenstrasse 16, D-5042 Erftstadt (DE)**

**EP 0 091 043 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Abtrennung von Schwermetallbestandteilen, insbesondere von Verbindungen des Cadmiums, Quecksilbers und Bleis, aus Rohphosphorsäuren, die durch Aufschluss von Rohphosphaten mit Salpetersäure gewonnen wurden und aus denen die Hauptmenge des beim Aufschluss gebildeten Calciumnitrats entfernt wurde.

Phosphorhaltige Düngemittel werden vielfach durch sauren Aufschluss von Phosphorit oder Apatit hergestellt. Unter der Einwirkung von Mineralsäure wird das schwerlösliche Tricalciumphosphat des Rohphosphates zersetzt. Die Calciumsalze der eingesetzten Mineralsäuren müssen anschliessend abgetrennt werden, um die entstandene rohe Phosphorsäure als Produkt zu erhlaten. Im Rohphosphat enthaltene metallische Verunreinigungen wie Cd, Pb, Hg und As verbleiben grösstenteils in der Phosphorsäure. Da diese Säure nicht für alle Verwendungszwecke geeignet ist, wurden bereits zahlreiche Versuche unternommen, um sie von unerwünschten metallischen Verunreinigungen zu befreien. Für die Verarbeitung roher Phosphorsäure zu Düngemitteln boten diese Vorschläge aber bisher keinen technisch günstigen Weg.

Die vorgeschlagenen Verfahren sind insbesondere ungeeignet, um die beim Aufschluss von Rohphosphat mittels 60%iger Salpetersäure nach dem bekannten Odda-Verfahren entstehende rohe Phosphorsäure von Schwermetallionen zu befreien.

Beim Odda-Prozess wird die stark salpetersäurehaltige Nassphosphorsäure des Aufschlusses zur Abscheidung des Calciumnitrats, dessen Löslichkeit stark temperaturabhängig ist, abgekühlt und das Calciumnitrat als Tetrahydrat abgetrennt. Im Rohphosphat vorhandene Schwermetallionen wie Cd, Pb, Hg und As verbleiben grösstenteils in der Lösung des Aufschlusses, der sogenannten Muttersäure. Die Muttersäure enthält gewöhnlich ca. 15 bis 20 Gew.-% $P_2O_5$, 30 bis 35 Gew.-% $HNO_3$ und 7 bis 10 Gew.-% CaO. Sie wird anschliessend üblicherweise stufenweise mit Ammoniak unter Verdampfung von Wasser neutralisiert, und der entstehende Kristallbrei wird mit Kaliumsalzen vermischt und zu Düngemitteln granuliert.

Der vorliegenden Erfindung lag somit die Aufgabe zugrunde, ein Verfahren zu entwickeln, mit dessen Hilfe schwer metallarme Düngemittel nach dem Odda-Prozess hergestellt werden können.

In der DE-Patentanmeldung P Nr. 3142666.2 wurde bereits ein Verfahren zur Abtrennung von Schwermetallverbindungen aus Zwischenprodukten der Fabrikation von Phosphordüngemitteln vorgeschlagen, bei dem man die bei dem Odda-Verfahren resultierende Muttersäure mit Ammoniak auf einen pH-Wert in dem Bereich von 0,5 bis 1,5, insbesondere 0,6 bis 1,2, einstellt und die so erhaltene phosphorsaure Lösung, vorzugsweise im Gegenstrom, mit einem mit Wasser nicht oder nur wenig mischbaren Lösungsmittel extrahiert, welches aus der Gruppe der Dithiophosphorsäurediester ausgewählt und vorteilhafterweise im Gemisch mit einem inerten organischen Verdünnungsmittel angewandt wird.

In Weiterentwicklung dieses Erfindungsgedankens wurde sodann in der DE-Patentanmeldung P Nr. 3209183.4 vorgeschlagen, die Extraktion in analoger Weise unter Verwendung von Dithiophosphinsäuren und/oder Dithiophosphonsäure-O-estern als Extraktionsmittel durchzuführen.

In weiterer Ausgestaltung der obengenannten Verfahren wurde nun überraschenderweise gefunden, dass man die Schwermetallbestandteile, insbesondere Cadmium, Quecksilber und Blei, sehr vereinfacht und besonders wirksam dadurch eliminieren kann, dass man die beim Odda-Verfahren resultierende und mit Ammoniak auf einen pH-Wert zwischen 0,5 und 1,5 eingestellte phosphorsaure Lösung mit einer Diorganyldithiophosphorverbindung und einem Adsorptionsmittel vermischt und die so behandelte phosphorsaure Lösung von der Diorganyldithiophosphorverbindung und dem Adsorptionsmittel abtrennt.

Die Anwendung der Diorganyldithiophosphorverbindung und des Adsorptionsmittels kann entweder als Gemisch erfolgen, oder es wird zunächst die Diorganyldithiophosphorverbindung zugegeben und anschliessend das Adsorptionsmittel zugesetzt. Nach erfolgter Behandlung werden die Diorganyldithiophosphorverbindung und das Adsorptionsmittel von der gereinigten Phosphorsäure abgetrennt.

Gegenstand der Erfindung ist daher ein Verfahren zur Abtrennung von Schwermetallbestandteilen, insbesondere von Verbindungen des Cadmiums, Quercksilbers und Bleis, aus nach dem Odda-Verfahren gewonnener Rohphosphorsäure, dadurch gekennzeichnet, dass man diese Rohphosphorsäure mit Ammoniak auf einen pH-Wert zwischen 0,5 und 1,5, vorzugsweise zwischen 0,6 und 1,2, einstellt, anschliessend mit einer Diorganyldithiophosphorverbindung und einem Adsorptionsmittel in Kontakt bringt und danach abtrennt.

Als Adsorptionsmittel können erfindungsgemäss z. B. Aktivkohle, Russ, gemahlene Braunkohle, poröse Harze, Kieselgur, Bleicherde, Kieselgel, synthetische Kieselsäuren, Zeolithe eingesetzt werden. Als Diorganyldithiophosphorverbindung werden erfindungsgemäss bevorzugt Dithiophosphorsäure-O,O-diester I, Dithiophosphonsäure-O-monoester II oder Dithiophosphinsäure III der allgemeinen Formeln

(I) 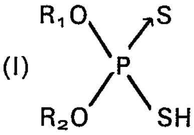 (II) 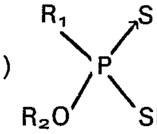 (III) 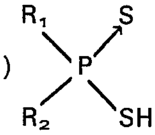

verwendet, in denen $R_1$ und $R_2$, die gleich oder verschieden sein können, gesättigte oder ungesättigte aliphatische, alicyclische, araliphatische oder aromatische Kohlenwasserstoffreste mit 1 bis 24 C-Atome, die gegebenenfalls substituiert sind,

und $R_1$ und $R_2$ zusammen 2 bis 48 C-Atome, vorzugsweise 4 bis 24 C-Atome, aufweisen sowie ggf. auch gemeisam einen ggf. substituierten zweibindigen Rest bilden, bedeuten.

Als Beispiele für erfindungsgemässe Diorganyldithiophosphorverbindungen der Formel I, II und III seien u. a. genannt:

Dithiophosphorsäure-O,O-di-(2-ethylhexyl)-ester

Dithiophosphorsäure-O,O-diisotridecylester

Dithiophosphorsäure-O,O-dikresylester

Cyclohexyldithiophosphonsäure-O-n-butylester

Dicyclohexyldithiophosphinsäure

Ditricyclodecenyldithiophosphinsäure

Auch Gemische von Diorganyldithiophosphorverbindungen können eingesetzt werden. Bei den Verbindungen der Formel I bis III mit substituierten Resten $R_1$ und $R_2$ kommen vorzugsweise Substitutionen durch Halogen, Hydroxi-, Alkoxi-, Carboxyl- oder $NO_2$-Gruppen in Frage. Da die Diorganyldithiophosphorverbindungen leicht oxidierbar sind, weswegen sie auch als Antioxidanten eingesetzt werden (vgl. FR-Pat. Nr. 1396093, US-Patente Nrn. 2523147, 2705694, 2798880 und 3300409), musste erwartet werden, dass die Anwesentheit von Oxidationsmitteln, wie sie Nitrationen hoher Konzentration in saurer Lösung sind, ein Hindernis für die erfindungsgemässe Behandlung der obengenannten Muttersäure mittels der Diorganyldithiophosphorverbindungen darstellen würde. Ausserdem enthält die Muttersäure vom Aufschluss her noch $NO_x$.

In Bereichen höherer pH-Werte wird andererseits eine Behandlung von Muttersäure dadurch behindert, dass gleichzeitig komplexe Niederschläge aus Phosphaten, Kieselgel, Calcium-, Magnesium- und Aluminiumverbindungen auftreten.

Die Einhaltung des erfindungsgemässen Bereichs des pH-Wertes von 0,5 bis 1,5, vorzugsweise 0,6 bis 1,2, ist insbesondere für die Umsetzung des Cadmiums mit den Diorganyldithiophosphorverbindungen und deren Abtrennung wichtig.

Bei den für das erfindungsgemässe Verfahren eingesetzten Diorganyldithiophosphorverbindungen handelt es sich ganz allgemein um solche Produkte, die in Wasser wenig oder überhaupt nicht löslich sind. Es hat sich gezeigt, dass insbesondere solche Diorganyldithiophosphorverbindungen der Formeln I bis III für das erfindungsgemässe Verfahren geeignet sind, die zwei hydrophobe organische Substituenten $R_1$ und $R_2$ aufweisen.

Die Diorganyldithiophosphorverbindungen können unverdünnt oder im Gemisch mit einem oder mehreren inerten organischen Lösungsmitteln eingesetzt werden.

Zur Messung der pH-Werte in den konzentriert mineralsauren Lösungen werden Glaselektroden, zweckmässigerweise Einstabmessketten mit dem Bezugssystem Ag/AgCl, Bezugselektrolyt 3 mol KCl + AgCl oder 3,5 mol KCl, verwendet. Es können speziell schwefelwasserstoffsichere Einstabmessketten verwendet werden, die z. B. mit zwei hintereinander geschalteten, durch Diaphragmen getrennten Elektrolytkammern ausgestattet sind.

Die pH-Werte müssen in der konzentrierten Lösung ohne Verdünnung und bei Raumtemperatur gemessen werden.

Es empfiehlt sich, die mit Ammoniak behandelte Muttersäure bei Temperaturen zwischen 10 und 100° C mit den Diorganyldithiophosphorverbindungen und dem Adsorptionsmittel in Kontakt zu bringen.

Die aus dem Adsorptionsmittel und der Diorganyldithiophosphorverbindung bestehende Mischung lässt sich vorteilhaft z. B. in der Weise herstellen, dass man das Adsorptionsmittel mit den flüssigen Dithioverbindungen tränkt, wobei Dithioverbindungen, die bei Zimmertemperatur fest sind, geschmolzen werden. Die hierbei resultierenden Mischungen sind fest und rieselfähig. Dadurch kann die gereinigte Phosphorsäure leicht durch Dekantieren, Filtrieren oder Flotieren von der Mischung wieder abgetrennt werden.

Die Komponenten Diorganyldithiophosphorverbindung und Adsorptionsmittel können aber auch sukzessiv der ammoniakbehandelten Muttersäure zugeführt bzw. zugemischt werden. Nach der Behandlung lässt man das Feststoffgemisch absitzen und trennt dann die überstehende Phosphorsäure in der angegebenen Weise ab.

Die Dosierung von Dithioverbindung und Adsorptionsmittel kann in einem weiten Bereich variiert werden, jedoch ist es aus Kostengründen wünschenswert, die Einsatzmengen so niedrig wie möglich zu halten.

Das Verhältnis von Dithioverbindung zu Adsorptionsmittel kann sich z. B. aus der maximalen Aufnahmefähigkeit des Adsorptionsmittels für die Dithioverbindung ergeben, jedoch kann auch eine niedrigere als die maximale Beladung gewählt werden.

Je nach Zusammensetzung der Muttersäure können die Mengen der benötigten Reinigungskomponenten schwanken, so dass deren optimale Mengen jeweils in Vorversuchen ermittelt werden sollten.

Es genügt im allgemeinen, die Diorganyldithiophosphorverbindung in einer mindestens 2 bis 5M Menge, bezogen auf die zu entfernenden Schwermetallionen, und das Adsorptionsmittel in einer Menge von 0,05 bis 5 Gew.-%, bezogen auf die zu reinigende Phosphorsäuremenge, einzusetzen.

Als Adsorptionsmittel ist jeder Stoff geeignet, der in der Lage ist, eine ausreichende Menge von Diorganyldithiophosphorverbindung an seiner Oberfläche so fest zu binden, dass nach der Schwermetallentfernung die in der Phosphorsäure in gelöster oder emulgierter Form verbelibende Menge an eingesetzter Dithioverbindung praktisch gleich Null ist. Solche Adsorptionsmittel sind z. B. Pulveraktivkohlen, Kornaktivkohlen oder auch Russe, wie sie entstehen bei der Pyrolyse von Acetylen oder bei der Schweröldruckvergasung in Gegenwart von sauerstoffhaltigen Gasen. Ebenso sind auch natürliche poröse Kohlenstoffprodukte wie z. B. gemahlene und getrocknete Braunkohle geeignet. Besonders haben sich auch Silikate, insbesondere Aluminosilikate wie Zeolithe bewährt.

Bevorzugt sind Aktivkohle, Russ, poröse Harze, Braunkohle und Silikate.

Bei einer sukzessiven Dosierung von Dithioverbindung und Adsorptionsmittel sollte die menge an Adsorptionsmittel etwa gleich gross sein wie die an Dithioverbindung. Auch hier ist von Fall zu Fall zu ermitteln, welche menge Adsorptionsmittel benötigt wird, damit die Phosphorsäure nach der Operation weitgehend frei von Resten an Dithioverbindung ist.

Zur Abtrennung des metallbeladenen Gemisches aus Dithioverbindung und Adsorptionsmittel von der gereinigten Muttersäure kann bei ausreichendem Dichteunterschied dekantiert werden. Anderenfalls kann das Reaktionsgemisch zentrifugiert oder filtriert werden. Eine Anreicherung von metallbeladenem Gemisch aus Dithioverbindung und Adsorptionsmittel kann auch durch Flotation erfolgen.

Eine weitere Ausführungsform der vorliegenden Erfindung verwendet die Perkolationstechnik. In diesem Fall wird ein grobkörniges Adsorptionsmittel, z. B. Kornaktivkohle oder kompaktierter Russ, mit einer flüssigen Diorganyldithiophosphorsäureverbindung getränkt und diese Mischung in eine Säule gefüllt. Sodann wird die zu reinigende Muttersäure über das Adsorberbett geleitet, wobei Cadmium und andere Metalle auf der Säule haften bleiben. Eine regenerierende Strippung des Adsorberbettes ist beispielsweise mit konzentrierter Salzsäure möglich.

Zusammenfassend können folgende Vorteile des erfindungsgemässen Verfahrens hervorgehoben werden:

Die Reinigung kann in einem einzigen, einfachen Verfahrensschritt durchgeführt werden, eine nachbehandlung, z. B. eine Strippung der Phosphorsäure, ist nicht erforderlich. Der Einsatz an Reagenzien ist gering, insbesondere braucht die Menge an Diorganyldithiophosphorverbindung nur wenig über der zur Entfernung der entsprechenden Kationen notwendigen Menge zu liegen.

Die Erfindung wird durch die nachfolgenden Beispiele näher erläutert.

*Beispiele 1 bis 5:*

Durch Aufschluss von Rohphosphat mit Salpetersäure nach dem Odda-Verfahren erhaltene und geklärte Muttersäure wurde mittels gasförmigem Ammoniak bei Raumtemperatur auf pH 1,1 eingestellt.

Zu Proben von jeweils 100 g dieser auf pH 1,1 eingestellten Muttersäure wurden 1 g der in der nachfolgenden Tabelle für die Beispiele 1 bis 5 jeweils genannten Diorganyldithiophosphorverbindung gegeben und 15 min lang verrührt. Nach Zusatz von 0,5 g des ebenfalls in der Tabelle für die Beispiele 1 bis 5 jeweils aufgeführten Adsorptionsmittels wurden die Proben weitere 15 min lang gerührt. Anschliessend wurde filtriert, das phosphorsaure Filtrat mit 5 ml konz. HCl vermischt und durch Atomabsorption analysiert. Die gefundenen Schwermetallgehalte wurden auf die ammoniakbehandelte Muttersäure umgerechnet. Einzelheiten und Ergebnisse der durchgeführten Beispiele 1 bis 5 sind in der Tabelle zusammengefasst wiedergegeben.

*(Tabelle auf der nächsten Seite)*

**Patentansprüche**

1. Verfahren zur Abtrennung von Schwermetallbestandteilen, insbesondere von Verbindungen des Cadmiums, Quecksilbers und Bleis, aus nach dem Odda-Verfahren gewonnener Rohphosphorsäure, dadurch gekennzeichnet, dass man diese Rohphosphorsäure mit Ammoniak auf einen pH-Wert zwischen 0,5 und 1,5 einstellt, anschliessend mit einer Diorganyldithiophosphorverbindung und einem Adsorptionsmittel in Kontakt bringt und danach abtrennt.

2. Verfahren nach Anspruch 1, dadurch gekennzeichnet, dass man die Diorganyldithiophosphorverbindung im Gemisch mit dem Adsorptionsmittel einsetzt, oder dass man der mit Ammoniak behandelten Rohphosphorsäure zuerst die Diorganyldithiophosphorverbindung und dann das Adsorptionsmittel zusetzt.

3. Verfahren nach den Asnprüchen 1 und 2, dadurch gekennzeichnet, dass man als Adsorptionsmittel Aktivkohle, Russ, poröse Harze, Braunkohle oder Silikate einsetzt.

4. Verfahren nach den Ansprüchen 1 bis 3, dadurch gekennzeichnet, dass man Diorganyldithiophosphorverbindungen der allgemeinen Formel (I), (II), (III)

(I) 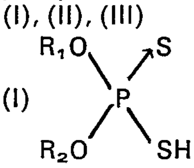 (II) 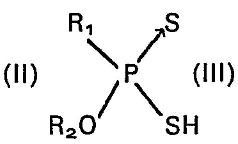 (III) 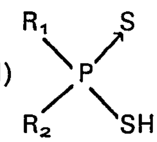

einsetzt, in denen $R_1$ und $R_2$, die gleich oder verschieden sein können, gesättigte oder ungesättigte aliphatische, alicyclische, araliphatische oder aromatische Kohlenwasserstoffreste mit 1 bis 24 C-Atome, die ggf. substituiert sind, und $R_1$ und $R_2$ zusammen 2 bis 48 C-Atome, vorzugsweise 4 bis 24 C-Atome, aufweisen sowie ggf. auch gemeinsam einen ggf. substituierten zweibindigen Rest bilden, bedeuten.

5. Verfahren nach den Ansprüchen 1 bis 4, dadurch gekennzeichnet, dass man die mit Ammoniak behandelte Rohphosphorsäure bei Temperaturen zwischen 10 und 100° C mit der Dithioverbindung und dem Adsorptionsmittel in Kontakt bringt.

6. Verfahren nach den Ansprüchen 1 bis 5, dadurch gekennzeichnet, dass die Dithioverbindung mindestens in einer 2 bis 5M Menge, bezogen auf die zu entfernenden Schwermetallionen, eingesetzt wird.

7. Verfahren nach den Ansprüchen 1 bis 6, dadurch gekennzeichnet, dass das Adsorptionsmittel in einer Menge von 0,05 bis 5 Gew.-%, bezogen auf die Rohphosphorsäuremenge, eingesetzt wird.

8. Verfahren nach den Ansprüchen 1 bis 7, dadurch gekennzeichnet, dass es kontinuierlich in einer Säulenapparatur, die ein Gemisch aus Diorganyldithiophosphorverbindung und Adsorptionsmittel in grobkörniger Form enthält, durchgeführt wird.

*Tabelle*

| Bei-spiel Nr. | Diorganyldithio-phosphorverbindung | Adsorptions-mittel | Cd-Gehalt (Mikrogramm Cd pro Gramm Lösung) Phosphorsaure Lösung | | Hg-Gehalt (Mikrogramm Hg pro Gramm Lösung) Phosphorsaure Lösung | |
|---|---|---|---|---|---|---|
| | | | vor der Behandlung | nach der Behandlung | vor der Behandlung | nach der Behandlung |
| 1 | Dithiophosphorsäure-O,O-di-(2-ethylhexyl)ester | Aktivkohle | 10,37 | 0,12 | 0,054 | <0,012 |
| 2 | Dithiophosphorsäure-O,O-di-(2-ethylhexyl)ester | Kieselgur (Celite) | 10,37 | <0,12 | 0,054 | <0,012 |
| 3 | Dithiophosphorsäure-O,O-di-(2-ethylhexyl)ester | getrocknete, gemahlene Braunkohle | 10,37 | 0,16 | 0,054 | <0,016 |
| 4 | Dithiophosphorsäure-O,O-diisotridecylester | Aktivkohle | 10,37 | <0,13 | 0,054 | <0,013 |
| 5 | Cyclohexyldithiophos-phonsäure-O-n-butylester | Aktivkohle | 10,37 | 0,12 | 0,054 | <0,012 |

## Claims

1. A process for the separation of heavy metal components, especially of compounds of cadmium, mercury and lead, from crude phosphoric acid obtained according to the Odda process, which comprises adjusting this crude phosphoric acid with ammonia to a pH of from 0.5 to 1.5, contacting it subsequently with a diorganyldithiophosphorus compound and an adsorbent, and then separating in therefrom.

2. The process as claimed in Claim 1, which comprises using the diorganyldithiophosphorus compound in admixture with the adsorbent, or adding first the diorganyldithiophosphorus compound to the crude phosphoric acid treated with ammonia, and then the adsorbent.

3. The process as claimed in one of Claims 1 or 2, which comprises using active charcoal, carbon black, porous resins, lignite or silicates as adsorbent.

4. The process as claimed in one of Claims 1 to 3, which comprises using diorganyldithiophosphorus compounds of the Formulae (I), (II), (III)

(I) 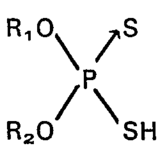 (II) 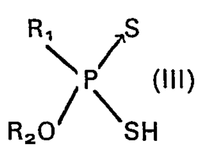 (III) 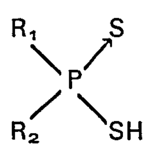

in which $R_1$ and $R_2$, being identical or different, are saturated or unsaturated aliphatic, alicyclic, araliphatic or aromatic hydrocarbon radicals having from 1 to 24 carbon atoms, which are optionally substituted, and $R_1$ and $R_2$ together have from 2 to 48, preferably 4 to 24, carbon atoms, and may form together an optionally substituted double bonded radical.

5. The process as claimed in one of Claims 1 to 4, which comprises contacting the crude phosphoric acid, treated with ammonia, at temperatures of from 10 to 100° C with the dithio compound and the adsorbent.

6. The process as claimed in one of Claims 1 to 5, which comprises using the dithio compound in an at least 2 to 5M amount, relative to the heavy metal ions to be removed.

7. The process as claimed in one of Claims 1 to 6, which comprises using the adsorbent in an amount of from 0.05 to 5% by weight, relative to the crude phosphoric acid amount.

8. The process as claimed in one of Claims 1 to 7, which comprises carrying it out continuously in a column apparatus containing a mixture of diorganyldithiophosphorus compound and adsorbent in coarse-grain form.

## Revendications

1. Procédé pour séparer des constituants à base de métaux lourds, plus particulièrement des composés du cadmium, du mercure et du plomb, à partir de l'acide phosphorique brut obtenu par la méthode Odda, procédé caractérisé en ce qu'on règle le pH de cet acide phosphorique brut, au moyen d'ammoniac, à une valeur comprise entre 0,5 et 1,5, après quoi on met cet acide en contact avec un composé diorganyldithiophosphoré et un agent d'adsorption, puis on le sépare.

2. Procédé selon la revendication 1, caractérisé en ce qu'on utilise le composé diorganyldithiophosphoré en mélange avec l'agent d'adsorption, ou l'on ajoute d'abord le composé diorganyldithiophosphoré, puis l'agent d'adsorption, à l'acide phosphorique brut traité par l'ammoniac.

3. Procédé selon l'une des revendications 1 ou 2, caractérisé en ce qu'on utilise, comme agent d'adsorption, du charbon actif, du noir de carbone, une résine poreuse, du lignite ou un silicate.

4. Procédé selon l'une des revendications 1 à 3, caractérisé en ce qu'on utilise des composés diorganyldithiophosphorés répondant aux formules générales (I), (II), (III)

(I) 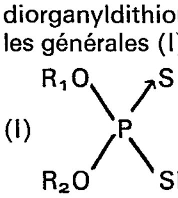 (II) 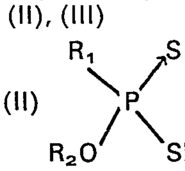 (III) 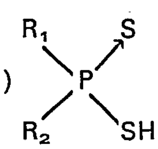

dans lesquelles $R_1$ et $R_2$ représentent chacun, indépendamment l'un de l'autre, un radical hydrocarboné aliphatique saturé ou non, alicyclique, araliphatique ou aromatique contenant de 1 à 24 atomes de carbone et éventuellement substitué, le nombre total des atomes de carbone contenus dans $R_1$ et $R_2$ pouvant aller de 2 à 48, de préférence de 4 à 24, et $R_1$ et $R_2$ pouvant également former ensemble un radical bivalent éventuellement substitué.

5. Procédé selon l'une des revendications 1 à 4, caractérisé en ce que l'acide phosphorique brut qui a été traité par l'ammoniac est mis en contact avec le composé dithio et l'agent d'adsorption à des températures comprises entre 10 et 100° C.

6. Procédé selon l'une des revendications 1 à 5, caractérisé en ce que le composé dithio est mis en jeu en une quantité molaire représentant au moins de 2 à 5 fois la quantité molaire des ions de métaux lourds à éliminer.

7. Procédé selon l'une des revendications 1 à 6, caractérisé en ce que l'agent d'adsorption est mis en jeu en une quantité de 0,05 à 5% en poids par rapport à la quantité d'acide phosphorique brut.

8. Procédé selon l'une des revendications 1 à 7, caractérisé en ce qu'il est exécuté en continu dans un appareil à colonne qui contient un mélange constitué d'un composé diorganyldithiophosphoré et d'un agent d'adsorption sous forme de gros grains.